# EUROPÄISCHE PATENTSCHRIFT

(11) **EP 0 612 853 B1**
(45) Veröffentlichungstag und Bekanntmachung des Hinweises auf die Patenterteilung: **08.07.1998**
(21) Anmeldenummer: 94102666.8
(22) Anmeldetag: 22.02.1994
(51) Int. Cl.: C22B 7/00, C22B 11/02

(54) **Verfahren zur Rückgewinnung von Wertmetallen aus gebrauchten Abgaskatalysatoren**
Method for recovering metals from used exhaust gas catalysts
Procédé de récupération de métaux précieux à partir de catalyseurs de gaz d'échappement usés

(30) Priorität: 24.02.1993 DE 4305647
(43) Veröffentlichungstag der Anmeldung: 31.08.1994
(73) Patentinhaber: ELEKTRO-CHEMIE IBBENBÜREN GMBH, D-49479 Ibbenbüren (DE); Grossmann, Horst, Dr., 30173 Hannover (DE)
(72) Erfinder: Grossmann, Horst, Dr., D-30173 Hannover (DE)
(74) Vertreter: Haar, Lucas Heinz Jörn, Dipl.-Ing.

(56) Entgegenhaltungen:
- EP-A- 0 492 691
- US-A- 4 960 573
- JOURNAL OF THE LESS-COMMON METALS Bd. 60, Nr. 1, Juli 1978, LAUSANNE CH Seiten P1 - P3 KAUFFMAN ET AL. 'The recovery of Iridium from Laboratory Residues'
- PATENT ABSTRACTS OF JAPAN vol. 14, no. 232 (C-0719)17. Mai 1990 & JP-A-02 057 642 (TANAKA KIKINZOKU KOGYO KK) 27. Februar 1990
- PATENT ABSTRACTS OF JAPAN vol. 14, no. 497 (C-0774)30. Oktober 1990 & JP-A-02 205 635 (TANAKA KIKINZOKU KOGYO KK) 15. August 1990
- PATENT ABSTRACTS OF JAPAN vol. 5, no. 144 (C-071)11. September 1981 & JP-A-56 075 538 (TOYOTA MOTOR CORP) 22. Juni 1981
- DATABASE WPI Week 915, 1991 Derwent Publications Ltd., London, GB; AN 91-032493 & JP-A-2 301 528 (TANAKA KIKINZOKU KOGYO) 13. Dezember 1990
- CHEMICAL ABSTRACTS, vol. 113, no. 22, 26. November 1990, Columbus, Ohio, US; abstract no. 198967p, SHORIKOV ET AL. 'Chlorination of ruthenium in a sodium chloride + lithium chloride melt' & ZH. PRIKL. KHIM. Bd. 63, Nr. 7, 1990, LENINGRAD, SU Seiten 1494 - 1497 SHORIKOV ET AL.

## Beschreibung

Die Erfindung betrifft ein Verfahren zur Rückgewinnung der katalytisch aktiven Platin und Rhodium enthaltenden Wertmetalle der Platingruppe aus gebrauchten Abgaskatalysatoren, bei dem die gebrauchten Abgaskatalysatoren nach Zugabe eines Alkalichlorids in einem Reaktor bei erhöhter Temperatur in eine Chlorgasatmosphäre gebracht und die hierbei erhaltenen Chloride durch Auswaschen zurückgewonnen werden.

Wegen des hohen Wertes der als katalytisch aktive Metalle verwendeten Metalle der Platingruppe werden verbrauchte Katalysatoren seit langer Zeit aufgearbeitet und die katalytisch aktiven Metalle einer Wiederverwendung zugeführt. Bekannte Verfahren dafür sind einerseits nasschemische Verfahren, bei denen die katalytisch aktiven Wertmetalle in oxidierenden Säuren aufgelöst werden, teilweise unter Mitauflösung der Trägermaterialien der verbrauchten Katalysatorsubstanz. Der Anfall an ökologischen unerwünschten sauren Restlösungen ist hoch. Andererseits sind pyrometallurgische Verfahren bekannt, bei denen die gesamte Katalysatormasse geschmolzen wird. Dafür sind Temperaturen von 1400°C und höher notwendig, aus den Trägermaterialien fallen große Mengen Schlacken an und die Abtrennung der Wertmetalle aus dem erschmolzenen Sammlermetall ist aufwendig.

Nun zeigt es sich aber, daß man gebrauchte Katalysatoren in einer Atmosphäre aus Chlorgas bei einer dafür hinreichenden Temperatur chlorieren kann. Dabei entstehen beispielsweise aus den Metallen Platin, Rhodium oder Palladium die zugehörigen Chloride PtCl₄, RhCl₃, oder PdCl₂. Erfolgt die Chlorierung in Gegenwart eines Alkalichlorides, so entstehen die leicht wasserlöslichen Hexachlorokomplexe der Platinmetalle.

Der Chemismus dieser Chlorierungsreaktionen ist an sich lange bekannt und der Literatur zu entnehmen, z.B. Gmelin, Handbook of Inorganic Chemistry, Springer Verlag 1986; F. Cotton, G. Wilkinson, Anorganische Chemie, Verlag Chemie 1967, Seite 917; G. Brauer, Handbook of Preparative Inorganic Chemistry, Vol. 2, Academic, New York 1965, Seite 1587; Ullmanns Encyklopädie der Technischen Chemie, 4. Auflage, Verlag Chemie, Band 18.

Aus der US-A-4 960 573 ist ein Verfahren der eingangs genannten Art bekannt, bei dem ein Katalysator aus Siliciumcarbid, der ein Gew.% Platin trägt, in ein Reaktionsrohr bei einer Temperatur zwischen 600° und 1000°C während einer Stunde einer Chlorgasatmosphäre ausgesetzt wird. Der gewonnene Reaktionsrückstand wird anschließend in verdünnte Salzsäure (0,2 N) gegeben und dann der in der Salzsäure befindliche Rückstand abfiltriert. Hierbei konnte das Platin nahezu vollständig in dem Filtrat zurückgewonnen werden. Der Siliziumcarbidträger wurde teilweise als erster Filterrückstand, teilweise als gasförmiges Reaktionsprodukt Siliziumtetrachlorid aufgefangen. Die Rückgewinnung des Trägermaterials konnte gemäß einer Weiterbildung des bekannten Verfahrens durch Hinzugabe von Kaliumsalz vor der Chlorierung verbessert werden. Die Zugabe des Kaliumsalzes erfolgte durch Mischen von 0,5 g des Katalysators und 0,05 g des Kaliumsalzes in einer Kugelumlaufmühle. Dem genannten Dokument ist weiterhin ein Verfahrensbeispiel zu entnehmen, bei dem ein Siliziumcarbidträger als katalytische Substanzen 1 Gew.% Platin, 0,5 Gew.% Rhodium und 0,5 Gew.% Palladium aufweist. Mit diesem Katalysatormaterial wurde der Chlorinationsprozeß bei 900°C durchgeführt und die Umwandlung von Silizium zu Siliziumchlorid, sowie die Rückgewinnung von Platin, Rhodium und Palladium gemessen. Der gesamte Anteil des Reaktionsrückstands wurde in verdünnte Salzsäure (0,2 N) gegeben und die Salzsäurelösung mit dem darin enthaltenen Rückstand filtriert und mit heißem Wasser ausgewaschen. Hierbei wurde festgestellt, daß in dem Filtrat nahezu das gesamte Platin und Palladium enthalten war. Der feste Rückstand auf dem Filterpapier wurde verascht und gewogen. Zu der Asche wurde 0,2 g Kochsalz hinzugefügt. Anschließend wurde die Mischung bei einer Temperatur von 700°C einem Chlorgasstrom während der Dauer einer Stunde ausgesetzt. Bei dieser Behandlung wurde das RhCl₃ im Filterrückstand in Natriumhexachlororhodiomat (Na₃RhCl₆) umgewandelt. Dieses Material wurde dann in einer vorgegebenen Wassermenge gelöst, filtriert und das in dem Filtrat enthaltene Rhodium bestimmt.

Bei einem aus den Patent Abstracts of Japan, Band 14, Nr. 23 (C-0719) 17.05.1990; & JP-A-02057642 bekannten Verfahren zur Rückgewinnung der Wertmetalle eines Katalysators, der durch Aufbringen von Metallen der Platingruppe, wie Rhodium, Palladium und Platin auf die Oberfläche eines anorganischen Trägers, beispielsweise aus Aluminiumoxid gebildet ist, wird der Katalysator in eine wässrige Lösung eines Kohlenwasserstoffs, beispielsweise eines Sacharids getaucht, wodurch das Sacharid an dem Katalysator haftet, und anschließend getrocknet. Danach wird der Katalysator in eine wässrige Lösung eines Alkalihalids, beispielsweise Kochsalz, getaucht und getrocknet. In einer weiteren Verfahrensstufe wird der Katalysator auf 400 bis 900°C erwärmt und einem Chlorgasstrom ausgesetzt, um die Wertmetalle in eine wasserlösliche Verbindung zu überführen, die anschließend durch Waschen des Katalysators mit Wasser separiert werden.

Patent Abstracts of Japan, Band 14, Nr. 497 (C-0774), 30.10.1990; & JP-A-02 205 635 offenbart die Rückgewinnung von Ru aus Abfällen von Ru-Elektroden und Ru-Katalysatoren durch Chlorierung einer aus den Abfällen und NaCl oder KCl gebildeten, nicht näher definierten Mischung bei einer Temperatur von 400 bis 1200°C und nachfolgenden Auswaschen und Trennen des gebildeten Ru-Komplexsalzes mittels Wasser.

In Patent Abstracts of Japan, Band 5, Nr. 144 (C-071), 11.09.1998; & JP-A-56 075 538 ist ein Verfahren zum Umwandeln von Metallen der Platingruppe, wie z.B. Rhodium in ein lösbares Salz angegeben, bei dem das Metall enthaltende Erze, Keramiken, Katalysatoren oder dergleichen in eine erhitzte, 5%ige, wäßrige NaCl-Lösung eingetaucht, bei ca. 110°C getrocknet und anschließend bei 700 bis 800°C in einem Chlorgasstrom für ca. 1 Stunde geröstet werden.

Weiterhin ist aus Database BPI, Woche 915, 1991, Derwent Publications Ltd., London, GB; AN 91-032493 & JP-A-02 301 528 ein Verfahren zur Rückgewinnung eines Metalls der Platingruppe von einem Abfallkatalysator bekannt, bei dem der das Platingruppe Metall und/oder sein Oxid und ein Trägermetalloxid enthaltende Katalysator mit 0,5 bis 10,0 Gew.% KC1, NaCl oder CaCl gemischt und in einem Chlorgasstrom auf 600 bis 1200°C erhitzt wird. Die erhaltenen Chloride werden verdampft und von dem Trägermetalloxid getrennt.

Aufgabe der Erfindung ist es, ein Verfahren der eingangs genannten Art zur Rückgewinnung der katalytisch aktiven Wertmetalle aus gebrauchten Abgaskatalysatoren anzugeben, das einfach durchführbar ist und sich durch einen geringen Aufwand an Energie und Chemikalien auszeichnet.

Zur Lösung dieser Aufgabe sieht das erfindungsgemäße Verfahren vor, daß das Alkalichlorid in einer Menge von bis zum 10-fachen des aus Platin und Rhodium bestehenden Wertmetallinhaltes der Abgaskatalysatoren in Gramm-Atom zugesetzt wird, daß die Abgaskatalysatoren in einer einzigen Verfahrensstufe in dem Reaktor bei einer Temperatur zwischen 350°C und 650°C für eine Verweilzeit zwischen 0,2 und 3 Stunden in die Chlorgasatmospähre gebracht und hierbei aus den in den Abgaskatalysatoren enthaltenen Wertmetallen Hexachlorokomplexe gebildet werden und daß nach dem Abkühlen des Reaktionsprodukts die Hexachlorokomplexe der Metalle mit wäßriger Salzsäure bei einer pH-Wert-Einstellung von 1 extrahiert werden.

Bevorzugte Ausführungsformen des erfindungsgemäßen Verfahrens sind in den Ansprüchen 2-8 beschrieben.

Das erfindungsgemäße Verfahren hat den Vorteil, daß durch die Chlorierungsreaktion nur die katalytisch aktiven Metalle in Lösung gebracht werden, während das Trägermaterial nicht verändert wird und damit ebenfalls einer Wieder-bzw. Weiterverwendung zugeführt werden kann. Außerdem ist der Verbrauch an Chemikalien sehr gering entsprechend den geringen Konzentrationen der katalytisch aktiven Metalle. Damit ist die vorgeschlagene Arbeitsweise sehr umweltfreundlich.

Im folgenden wird eine bevorzugte Verfahrensweise der Erfindung beschrieben.

Die gebrauchten Altkatalysatoren werden, wenn gewünscht, auf eine zweckmäßige Korngröße zerkleinert und in den Aufgabetrichter eines Dosierers befördert. Dieser Dosierer fördert einen kontinuierlichen Strom auf eine Zuteilrinne, auf die gleichzeitig ein zweiter Dosierer Alkalichlorid dosiert. Die Zuteilrinne befördert diesen Feststoffstrom in den Einlauf eines Drehrohrofens. Über eine Zuleitung in das Innere dieses Ofens wird gerade soviel Chlor eingeleitet, daß eine Chloratmosphäre aufrechterhalten wird. Eventuelle Leckagemengen werden in einen Abgaswäscher gesaugt. Das chlorierte Produkt wird abgekühlt und in ein Extraktionsgefäß gefördert, in dem mit Wasser und Salzsäure die löslichen Bestandteile unter Rühren extrahiert werden. Feststoff und Lösung werden getrennt und nach bekannten Methoden weiterverarbeitet.

Zur weiteren Erläuterung der Erfindung ist nachfolgend ein Beispiel angegeben:

Es wurden 75 g eines Katalysators, der nach Analyse 1850 mg/kg Platin und 400 mg/kg Rhodium enthielt, zusammen mit 1 g Kochsalz in ein Reaktionsgefäß mit 200 ml Inhalt gebracht. Das Reaktionsgefäß wurde in einem elektrisch beheizten Ofen für eine Stunde auf 600° C erwärmt, dabei wurden etwa 1,5 1 Chlorgas durch das Reaktionsgefäß geleitet. Nach dem Abkühlen des Reaktionsgefäßes und dem Austausch der Chloratmosphäre durch Stickstoff wurde die Reaktionsmasse auf eine Filternutsche mit Weißbandfilter gebracht und mit 200 ml heißem Wasser extrahiert. Das orangefarbige Filtrat wurde in einem Messkolben aufgefangen, auf 250 ml aufgefüllt und zur Analyse gebracht. Die erhaltene Lösung enthielt 516 mg/l Platin und 97 mg/l Rhodium, das entspricht 93% bzw. 81% der vorgelegten Metallinhalte. Der Filterrückstand wurde getrocknet und ebenfalls analysiert. Dabei wurden 110 mg/kg Platin bzw. 82 mg/kg Rhodium gefunden, das sind 5,9% bzw. 18% der ursprünglich vorhandenen Metallmengen.

In einem weiteren, sonst ganz identisch durchgeführten Versuch wurde das Extraktionswasser mit Salzsäure auf pH 1 angesäuert. Dadurch erhöhte sich die Ausbeute um 6 bis 10 Prozentpunkte.

## Patentansprüche

1. Verfahren zur Rückgewinnung der katalytisch aktiven Platin und Rhodium enthaltenden Wertmetalle der Platingruppe aus gebrauchten Abgaskatalysatoren, bei dem die gebrauchten Abgaskatalysatoren nach Zugabe eines Alkalichlorids in einem Reaktor bei erhöhter Temperatur in eine Chlorgasatmosphäre gebracht und die hierbei erhaltenen Chloride durch Auswaschen zurückgewonnen werden, **dadurch gekennzeichnet**, daß das Alkalichlorid in einer Menge von bis zum 10-fachen des aus Platin und Rhodium bestehenden Wertmetallinhaltes der Abgaskatalysatoren in Gramm-Atom zugesetzt wird, daß die Abgaskatalysatoren in einer einzigen Verfahrensstufe in dem Reaktor bei einer Temperatur zwischen 350°C und 650°C für eine Verweilzeit zwischen 0,2 und 3 Stunden in die Chlorgasatmospähre gebracht und hierbei aus den in den Abgaskatalysatoren enthaltenen Wertmetallen Hexachlorokomplexe gebildet werden und daß nach dem Abkühlen des Reaktionsprodukts die Hexachlorokomplexe der Metalle mit wäßriger Salzsäure bei einer pH-Wert-Einstellung von 1 extrahiert werden.

2. Verfahren nach Anspruch 1, dadurch gekennzeichnet, daß die angewandten Temperaturen zwischen 550°C und 650°C liegen.

3. Verfahren nach einem der Ansprüche 1 oder 2, dadurch gekennzeichnet, daß die Verweilzeit zwischen 0,8 und 1,5 Stunden liegt.

4. Verfahren nach einem der vorhergehenden Ansprüche, dadurch gekennzeichnet, daß die Reaktion in einem rotierenden Reaktor, vorzugsweise in einem Drehrohrreaktor durchgeführt wird.

5. Verfahren nach einem der vorhergehenden Ansprüche, dadurch gekennzeichnet, daß der aus gebrauchten Abgaskatalysatoren bestehenden Reaktionsmasse das Alkalichlorid vor der Reaktion in dem genannten Drehrohrreaktor zugesetzt wird.

6. Verfahren nach einem der vorhergehenden Ansprüche, dadurch gekennzeichnet, daß die zugesetzte Menge an Alkalichlorid dem 3- bis 5-fachen des Wertmetallinhaltes der Abgaskatalysatoren in Gramm-Atom beträgt.

7. Verfahren nach einem der vorhergehenden Ansprüche, dadurch gekennzeichnet, daß die Zugabe des Alkalichlorids in fester oder in gelöster Form erfolgt.

8. Verfahren nach einem der vorhergehenden Ansprüche, dadurch gekennzeichnet, daß die Extraktion bei erhöhter Temperatur von 90°C erfolgt.

## Claims

1. A process for the recovery of the precious metals of the platinum group comprising catalytically active platinum and rhodium from used exhaust catalysers, in which the used exhaust catalysers, following the addition of an alkali chloride, are put into a reactor at increased temperature in a chlorine gas atmosphere and the chlorides hereby obtained are recovered by washing out, **characterised in that** the alkali chloride is added by an amount of up to 10 times the precious metal content, consisting of platinum and rhodium, in gram-atoms, of the exhaust catalysers, that the exhaust catalysers are brought into the reactor in a single stage process at a temperature between 350°C and 650°C for a dwell time of between 0.2 and 3 hours in the chlorine gas atmosphere and hexachloride complexes are thereby formed from the precious metals contained in them and that after cooling of the reaction products the hexachloride complexes of the metals are extracted using dilute hydrochloric acid at a pH value setting of 1.

2. A process according to Claim 1, characterised in that the applied temperatures lie between 550°C and 650°C.

3. A process according to one of the Claim 1 or Claim 2, characterised in that the dwell time lies between 0.8 and 1.5 hours.

4. A process according to one of the foregoing Claims, characterised in that the reaction is performed in a rotating reactor, preferably in a rotating tube reactor.

5. A process according to one of the foregoing Claims, characterised in that alkali chloride is added to the reaction mass arising from the used exhaust catalysers in the aforementioned rotating tube reactor before the reaction.

6. A process according to one of the foregoing Claims, characterised in that the added quantity of alkali chloride amounts to 3 to 5 times the metal content of the exhaust catalysers in gram-atoms.

7. A process according to one of the foregoing Claims, characterised in that the addition of alkali chloride is effected in solid or dissolved form.

8. A process according to one of the foregoing Claims, characterised in that the extraction is effected at a raised temperature of 90°C.

## Revendications

1. Procédé de récupération des métaux précieux du groupe du platine contenant du platine et du rhodium, catalytiquement actifs, à partir de catalyseurs de gaz d'échappement usés, dans lequel on introduit les catalyseurs de gaz d'échappement usés, après addition d'un chlorure de métal alcalin, dans un réacteur à une température élevée sous une atmosphère de chlore gazeux et l'on récupère par lavage les chlorures ainsi obtenus, caractérisé en ce qu'on ajoute le chlorure de métal alcalin en une quantité allant jusqu'à 10 fois le contenu en métaux précieux constitué de platine et de rhodium des catalyseurs de gaz d'échappement, en atomes-grammes, en ce qu'on introduit les catalyseurs de gaz d'échappement en une seule étape opératoire dans le réacteur à une température comprise entre 350°C et 650°C pendant un temps de séjour compris entre 0,2 et 3 heures dans l'atmosphère de chlore gazeux et en ce qu'on y forme à partir des métaux précieux contenus dans les catalyseurs de gaz d'échappement des complexes hexachloro, et en ce qu'après refroidissement du produit de la réaction on extrait les complexes hexachloro des métaux avec de l'acide chlorhydrique aqueux à un pH réglé à 1.

2. Procédé selon la revendication 1, caractérisé en ce que les températures utilisées se situent entre 550°C et 650°C.

3. Procédé selon l'une des revendications 1 ou 2, caractérisé en ce que le temps de séjour se situe entre 0,8 et 1,5 heure.

4. Procédé selon l'une des revendications précédentes, caractérisé en ce qu'on conduit la réaction dans un réacteur en rotation, de préférence dans un réacteur tubulaire tournant.

5. Procédé selon l'une des revendications précédentes, caractérisé en ce qu'on ajoute à la masse réactionnelle constituée des catalyseurs de gaz d'échappement usés, le chlorure de métal alcalin avant la réaction dans le réacteur tubulaire tournant mentionné.

6. Procédé selon l'une des revendications précédentes, caractérisé en ce que la quantité de chlorure de métal alcalin ajoutée est égale à 3 à 5 fois le contenu en métal précieux des catalyseurs de gaz d'échappement, en atomes-grammes.

7. Procédé selon l'une des revendications précédentes, caractérisé en ce qu'on procède à l'addition du chlorure de métal alcalin sous forme solide ou dissoute.

8. Procédé selon l'une des revendications précédentes, caractérisé en ce qu'on procède à l'extraction à une température augmentée de 90°C.
